# EUROPEAN PATENT SPECIFICATION

(11) **EP 3 274 407 B1**
(45) Date of publication and mention of the grant of the patent: **07.09.2022**
(21) Application number: 15716146.4
(22) Date of filing: 24.03.2015
(51) Int. Cl.: C08L 69/00

(54) **POLYSILOXANE-POLYCARBONATE COPOLYMER COMPOSITIONS**
POLYSILOXAN-POLYCARBONAT-COPOLYMER-ZUSAMMENSETZUNGEN
COMPOSITIONS COPOLYMÈRES DE POLYSILOXANE-POLYCARBONATE

(43) Date of publication of application: 31.01.2018
(73) Proprietor: SHPP Global Technologies B.V., 4612 PX Bergen op Zoom (NL)
(72) Inventor: GUAN, Bing, Shanghai 201319 (CN); CHEN, Yagang, Shanghai 201313 (CN); YANG, Jian, Shanghai 201203 (CN)
(74) Representative: Modiano, Micaela Nadia
(86) International application number: PCT/IB2015/052155
(87) International publication number: WO 2016/151362

(56) References cited:
- US-A1- 2014 339 586
- US-A1- 2014 357 781

## Description

### TECHNICAL FIELD

The present disclosure relates generally to polycarbonate compositions comprising polysiloxane-polycarbonate copolymers and flame retardants, methods of using the compositions, and processes for preparing the copolymers and compositions.

### BACKGROUND

Polycarbonate compositions comprising polysiloxane-polycarbonate copolymers often have useful flame retardance and mechanical properties, and may be useful for the manufacture of articles related to the protection of electronic devices, such as housing components. In particular, polycarbonate compositions with opaque polysiloxane-polycarbonate copolymers possess good impact resistance, chemical resistance, and tolerate the incorporation of colorants and fillers. US 2014/357781 A1 discloses polycarbonate blend compositions used in making article, e.g. electronic device. The compositions comprise first and second polycarbonate-polysiloxane polymer, and first/optionally second polycarbonate polymer having bisphenol A residues.

However, opaque polysiloxane-polycarbonate copolymers have a large siloxane domain size, and their use may result in articles that have cosmetic imperfections (e.g. delamination, gate blush and pearlescence). Replacement of the opaque polysiloxane-polycarbonate copolymers with transparent polysiloxane-polycarbonate copolymers in the aforementioned articles may improve appearance properties, but also results in decreased impact performance, decreased chemical resistance, and the loss of other desirable properties.

### DETAILED DESCRIPTION

The present disclosure relates to polycarbonate-based blend compositions, also referred to herein as thermoplastic compositions. The compositions include at least one polycarbonate, at least two polysiloxane-polycarbonate copolymers, at least one flame retardant, and at least one anti-drip agent. The compositions can include an additional polycarbonate. The compositions can include an impact modifier. The compositions can include a colorant. The compositions can include one or more additives. The compositions can have good impact strength and improved aesthetic properties, such as a reduction in knitline visibility.

The presence of an amount of opaque polysiloxane-polycarbonate copolymer in the composition may help to impart impact strength to the composition, while incorporation of a transparent polysiloxane-polycarbonate copolymer may help to improve aesthetic properties such as the reduction of color streaks and a decrease in knitline visibility in articles manufactured from the composition. In particular, when both opaque and transparent polysiloxane-polycarbonate copolymers are present in the composition, it is particularly useful for the composition to have a ratio of the siloxane content (wt %) contributed from the transparent polysiloxane-polycarbonate copolymer to the siloxane content (wt %) contributed from the opaque polysiloxane-polycarbonate of greater than or equal to 2, or from 3 to 4. It may also be particularly useful for the total siloxane content (wt%) of the composition to be 1% to 4%, or 1% to 2%. The combination of low overall siloxane content, specific polysiloxane-polycarbonate copolymer ratios, and the presence of potassium diphenylsulfone sulfonate (KSS) as the flame retardant, and an anti-drip agent results in a composition with an unexpected combination of high impact properties, good aesthetics and flame retardance.

The present disclosure also relates to methods for preparing the compositions and articles comprising the compositions. The disclosed methods provide polycarbonate compositions and articles with enhanced impact strength, and enhanced aesthetics.

### 1. Definition of Terms

The materials, methods, and examples disclosed herein are illustrative only and not intended to be limiting.

The terms "comprise(s)," "include(s)," "having," "has," "can," "contain(s)," and variants thereof, as used herein, are intended to be open-ended transitional phrases, terms, or words that do not preclude the possibility of additional acts or structures. The singular forms "a," "an" and "the" include plural references unless the context clearly dictates otherwise. The present disclosure also contemplates other embodiments "comprising," "consisting of" and "consisting essentially of," the embodiments or elements presented herein, whether explicitly set forth or not.

The conjunctive term "or" includes any and all combinations of one or more listed elements associated by the conjunctive term. For example, the phrase "an apparatus comprising A or B" may refer to an apparatus including A where B is not present, an apparatus including B where A is not present, or an apparatus where both A and B are present. The phrases "at least one of A, B, ... and N" or "at least one of A, B, ... N, or combinations thereof" are defined in the broadest sense to mean one or more elements selected from the group comprising A, B, ... and N, that is to say, any combination of one or more of the elements A, B, ... or N including any one element alone or in combination with one or more of the other elements which may also include, in combination, additional elements not listed. The terms "first," "second," "third," and the like, as used herein, do not denote any order, quantity, or importance, but rather are used to distinguish one element from another. Unless specifically stated the test standards are the most recent as of the date of March 15, 2015. As used herein, ASTM D1238 and ISO 1133 were year 2013; ASTM D256 was year 2010; ASTM D2244 was year 2015; and ASTM D648 was year 2007.

For the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated.

### 2. Polycarbonate Blend Compositions

Disclosed are polycarbonate-based blend compositions. The compositions include at least one polycarbonate, and may be referred to herein as "the first polycarbonate". The compositions may include an additional polycarbonate, which may be referred to herein as "the second polycarbonate". The compositions include at least two polysiloxane-polycarbonate copolymers. One of the polysiloxane-polycarbonate copolymers may be a transparent polysiloxane-polycarbonate copolymer, and may be referred to herein as "the first polysiloxane-polycarbonate copolymer". One of the polysiloxane-polycarbonate copolymers may be an opaque polysiloxane-polycarbonate copolymer, and may be referred to herein as "the second polysiloxane-polycarbonate copolymer". The compositions also include a flame retardant and an anti-drip agent. The compositions may include at least one impact modifier. The compositions may include a colorant. The compositions may include one or more additives.

The presence of an amount of opaque polysiloxane-polycarbonate copolymer in the composition may help to impart impact strength to the composition, while incorporation of a transparent polysiloxane-polycarbonate copolymer may help to improve aesthetic properties such as the reduction of color streaks and a decrease in knitline visibility in articles manufactured from the composition. In particular, when both opaque and transparent polysiloxane-polycarbonate copolymers are present in the composition, it is particularly useful for the composition to have a ratio of the siloxane content (wt %) contributed from the transparent polysiloxane-polycarbonate copolymer to the siloxane content (wt %) contributed from the opaque polysiloxane-polycarbonate of greater than or equal to 2, or from 3 to 4. It may also be particularly useful for the total siloxane content (wt%) of the composition to be 1% to 4%, or 1% to 2%. The combination of low overall siloxane content, specific polysiloxane-polycarbonate copolymer ratios, and the presence of potassium diphenylsulfone sulfonate (KSS) as the flame retardant, and an anti-drip agent results in a composition with an unexpected combination of high impact properties, good aesthetics and flame retardance.

### A. Polycarbonates

The compositions include at least one polycarbonate.

### (i) Homopolycarbonates/Copolycarbonates

The compositions may include one or more homopolycarbonates or copolycarbonates. The term "polycarbonate" and "polycarbonate resin" refers to compositions having repeating units of formula (1): 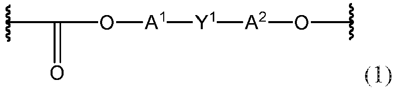 wherein each of the A¹ and A² is a monocyclic divalent aryl group and Y¹ is a bridging group having one or two atoms that separate A¹ and A². For example, one atom may separate A¹ from A², with illustrative examples of these groups including -O-, -S-, -S(O)-, -S(O)₂-, -C(O)-, methylene, cyclohexyl-methylene, 2-[2.2.1]-bicycloheptylidene, ethylidene, isopropylidene, neopentylidene, cyclohexylidene, cyclopentadecyclidene, cyclododecylidene, and adamantylidene. The bridging group of Y¹ may be a hydrocarbon group such as methylene, cyclohexylidene, or isopropylidene.

The repeating units of formula (1) may be derived from a dihydroxy monomer unit of formula (2): 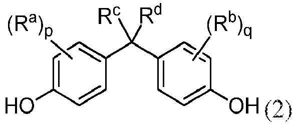 wherein R^{a} and R^{b} at each occurrence are each independently halogen, C₁-C₁₂ alkyl, C₁-C₁₂ alkenyl, C₃-C₈ cycloalkyl, or C₁-C₁₂ alkoxy; p and q at each occurrence are each independently 0 to 4; R^{c} and R^{d} are each independently hydrogen, halogen, alkyl, cycloalkyl, cycloalkylalkyl, aryl, arylalkyl, heterocyclyl, heterocyclylalkyl, heteroaryl, or heteroarylalkyl.

Exemplary monomers for inclusion in the polycarbonate include, but are not limited to, 4,4'-dihydroxybiphenyl, 1,1-bis(4-hydroxyphenyl)methane, bis(4-hydroxyphenyl)acetonitrile, bis(4-hydroxyphenyl)phenylmethane, bis(4-hydroxyphenyl)-1-naphthylmethane, 1,1-bis(4-hydroxyphenyl)ethane, 1,2-bis(4-hydroxyphenyl)ethane, 1,1-bis(4-hydroxyphenyl)-1-phenylethane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 1,1-bis(4-hydroxyphenyl)propane, 1,1-bis(4-hydroxy-t-butylphenyl)propane, 2,2-bis(4-hydroxyphenyl)propane ("bisphenol-A" or "BPA"), 2-(4-hydroxyphenyl)-2-(3-hydroxyphenyl)propane, 2,2-bis(4-hydroxy-2-methylphenyl)propane, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxy-3-bromophenyl)propane, 2,2-bis(4-hydroxyphenyl)hexafluoropropane, 1,1-bis(4-hydroxyphenyl)n-butane, 2,2-bis(4-hydroxyphenyl)butane, 3,3-bis(4-hydroxyphenyl)-2-butanone, 1,1-bis(4-hydroxyphenyl)isobutene, trans-2,3-bis(4-hydroxyphenyl)-2-butene, 1,6-bis(4-hydroxyphenyl)-1,6-hexanedione, 2,2-bis(4-hydroxyphenyl)octane, 1,1-bis(hydroxyphenyl)cyclopentane, 1,1-bis(4-hydroxyphenyl)cyclohexane, 1,1-bis(4-hydroxy-3-methylphenyl)cyclohexane, 1,1-bis(4-hydroxyphenyl)cyclododecane, 2,2-bis(4-hydroxyphenyl)adamantane, (alpha, alpha'-bis(4-hydroxyphenyl)toluene, 4,4'-dihydroxybenzophenone, 2,7-dihydroxypyrene, bis(4-hydroxyphenyl)ether, ethylene glycol bis(4-hydroxyphenyl)ether, bis(4-hydroxyphenyl)sulfide, bis(4-hydroxyphenyl)sulfoxide, bis(4-hydroxyphenyl)sulfone, bis(4-hydroxyphenyl)diphenylmethane, 1,6-dihydroxynaphthalene, 2,6-dihydroxynaphthalene, 6,6'-dihydroxy-3,3,3',3'-tetramethylspiro(bis)indane ("spirobiindane bisphenol"), 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, 2,7-dihydroxycarbazole, 2-phenyl-3,3-bis(4-hydroxyphenyl)phthalimidine (also referred to as 3,3-bis(4-hydroxyphenyl)-2-phenylisoindolin-1-one or "PPPBP"), 9,9-bis(4-hydroxyphenyl)fluorene, and bisphenol isophorone (also referred to as 4,4'-(3,3,5-trimethylcyclohexane-1,1-diyl)diphenol or "BPI"), 1,1-bis(4-hydroxy-3-methylphenyl)cyclohexane ("DMBPC"), tricyclopentadienyl bisphenol (also referred to as 4,4'-(octahydro-1H-4,7-methanoindene-5,5-diyl)diphenol), 2,2-bis(4-hydroxyphenyl)adamantane ("BCF"), 1,1-bis(4-hydroxyphenyl)-1-phenyl ethane ("BPAP"), and 3,3-bis(4-hydroxyphenyl)phthalide, or any combination thereof.

In certain embodiments, the polycarbonate may be a BPA polycarbonate having a weight average molecular weight of 15 kilogram per mole (kg/mol) [^{±} 1 kg/mol] to 40 kg/mol [^{±} 1 kg/mol], 20 kg/mol [^{±} 1 kg/mol] to 35 kg/mol [^{±} 1 kg/mol], 20 kg/mol [^{±} 1 kg/mol] to 32 kg/mol [^{±} 1 kg/mol], 25 kg/mol [^{±} 1 kg/mol] to 32 kg/mol [^{±} 1 kg/mol], 29 kg/mol [^{±} 1 kg/mol] to 32 kg/mol [^{±} 1 kg/mol], 20 kg/mol [^{±} 1 kg/mol] to 24 kg/mol [^{±} 1 kg/mol], or 21 kg/mol [^{±} 1 kg/mol] to 23 kg/mol [^{±} 1 kg/mol]. In certain embodiments, the polycarbonate may be a BPA polycarbonate having a weight average molecular weight of 21 kg/mol, 21.9 kg/mol, 22 kg/mol, 29 kg/mol, 29.9 kg/mol, or 30 kg/mol. The polycarbonate may have a weight average molecular weight of 21.9 kg/mol. The polycarbonate may have a weight average molecular weight of 29.9 kg/mol. Molecular weight determinations may be performed using gel permeation chromatography (GPC), using BPA polycarbonate standards.

The polycarbonate may be present in the blend compositions in an amount, by weight, ranging from 25% to 65%, 25% to 40%, 30% to 40%, or 35% to 45%, based on total weight of the composition. The polycarbonate may be present in the blend compositions in an amount, by weight, of 25%, 26%, 27%, 28%, 29%, 30%, 31%, 32%, 33%, 34%, 35%, 36%, 37%, 38%, 39%, 40%, 41%, 42%, 43%, 44%, 45%, 50%, 55%, 60%, 61%, 62%, 63%, 64%, or 65%, based on total weight of the composition.

### B. Polysiloxane-Polycarbonate Copolymers

The compositions may include one or more polysiloxane-polycarbonate copolymers. The polycarbonate structural unit of the polysiloxane-polycarbonate copolymer may be derived from carbonate units of formula (1) as described above. The carbonate units can be derived from one or more dihydroxy monomers of formula (2). The dihydroxy monomer can be bisphenol-A. The diorganosiloxane (referred to herein as "siloxane") units can be random or present as blocks in the copolymer.

The polysiloxane blocks comprise repeating siloxane units of formula (3): 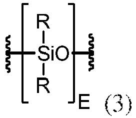 wherein each R is independently a C₁-C₁₃ monovalent organic group. For example, R can be a C₁-C₁₃ alkyl, C₁-C₁₃ alkoxy, C₂-C₁₃ alkenyl, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups can be fully or partially halogenated with fluorine, chlorine, bromine, or iodine, or a combination thereof. Where a transparent poly(carbonate-siloxane) is desired, R is unsubstituted by halogen. Combinations of the foregoing R groups can be used in the same copolymer.

The value of E in formula (3) can vary widely depending on the type and relative amount of each component in the composition, the desired properties of the composition, and like considerations. E may have an average value of 10 to 500, 10 to 200, 15 to 100, 30 to 100, 20 to 80, 30 to 60, or 40 to 50. Where E is of a lower value (e.g., less than 40), it can be desirable to use a relatively larger amount of the polysiloxane-polycarbonate copolymer. Conversely, where E is of a higher value (e.g., greater than 40), a relatively lower amount of the polysiloxane-polycarbonate copolymer can be used. A combination of a first and a second (or more) polysiloxane-polycarbonate copolymer can be used, wherein the average value of E of the first copolymer is less than the average value of E of the second copolymer.

The polysiloxane blocks may be provided by repeating structural units of formula (4): 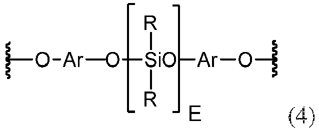 wherein E and R are as defined in formula (3), and each Ar is independently a substituted or unsubstituted C₆-C₃₀ arylene wherein the bonds are directly connected to an aromatic moiety. The Ar groups in formula (4) can be derived from a C₆-C₃₀ dihydroxyarylene compound, for example a dihydroxyarylene compound of formula (2) above. Specific dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxyarylene compounds can also be used.

Polycarbonates comprising units of formula (4) can be derived from the corresponding dihydroxy compound of formula (5): 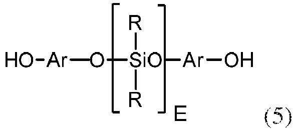 wherein Ar, R, and E are as described above. Compounds of formula (5) can be obtained by the reaction of a dihydroxyaromatic compound with, for example, an alpha, omega-bis-acetoxy-polydiorganosiloxane oligomer under phase transfer conditions. Compounds of formula (5) can also be obtained from the condensation product of a dihydroxyaromatic compound, with, for example, an alpha, omega bis-chloro-polydimethylsiloxane oligomer in the presence of an acid scavenger.

In a specific embodiment, where Ar of formula (5) is derived from resorcinol, the dihydroxy aromatic compound has formula (6): 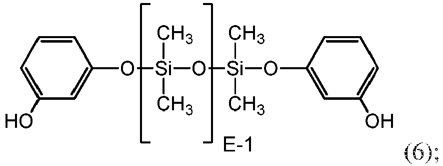 or, wherein Ar is derived from bisphenol-A, and the dihydroxy aromatic compound has formula (7): 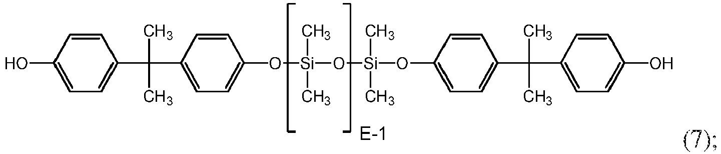 wherein E has an average value of between 30 and 100.

The polydiorganosiloxane blocks may have formula (8): 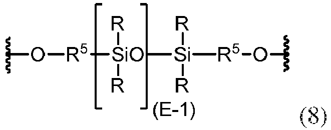 wherein R and E are as described in formula (3), and each R⁵ is independently a divalent C₁-C₃₀ organic group such as a C₁-C₃₀ alkyl, C₁-C₃₀ aryl, or C₁-C₃₀ alkylaryl.

The polysiloxane blocks of formula (8) may be derived from the corresponding dihydroxy compound of formula (9): 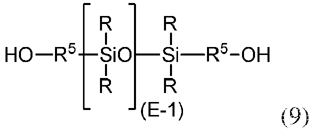 wherein R and E and R⁵ are as described for formula (8).

In a specific embodiment, the polysiloxane blocks are of formula (10): 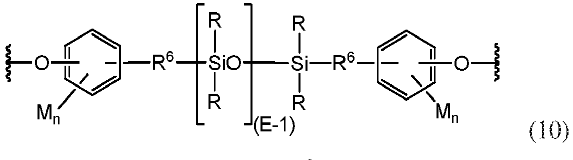 wherein R and E are as defined in formula (3), R⁶ is a divalent C₂-C₈ aliphatic group, each M is independently a halogen, cyano, nitro, C₁-C₈ alkylthio, C₁-C₈ alkyl, C₁-C₈ alkoxy, C₂-C₈ alkenyl, C₂-C₈ alkenyloxy, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, and each n is independently 0, 1, 2, 3, or 4. In an embodiment, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, each R is methyl, each R⁶ is a divalent C₁-C₃ aliphatic group, each M is methoxy, and each n is one.

Specific polysiloxane blocks are of formulas (10a)-(10c): 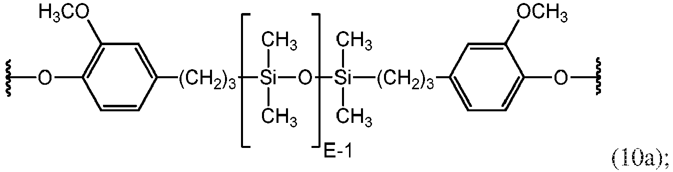 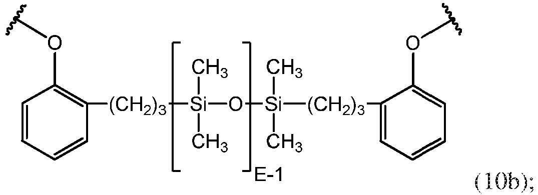 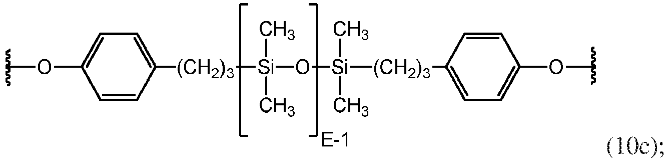 or a combination comprising at least one of the foregoing can be used, wherein E has an average value of 1 to 1000, 2 to 200, 10 to 200, 2 to 125, 5 to 125, 1 to 100, 5 to 100, 10 to 100, 30 to 100, 5 to 50, 20 to 80, 30 to 60, 40 to 50, or 5 to 20. In a preferred embodiment, the polysiloxane blocks are of the formula (10a).

Polysiloxane blocks of formula (10) can be derived from the corresponding dihydroxy polysiloxane of formula (11): 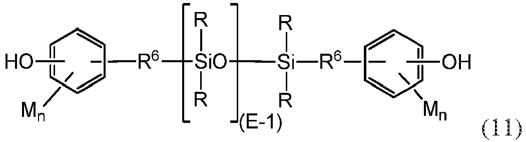 wherein each of R, E, M, R⁶, and n are as described for formula (10). Such dihydroxy polysiloxanes can be made by affecting a platinum-catalyzed addition between a siloxane hydride and an aliphatically unsaturated monohydric phenol. The polysiloxane hydride may have formula (12): 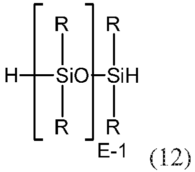 wherein R and E are as previously for formula (10). Exemplary aliphatically unsaturated monohydric phenols include, for example, eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane)s can then be manufactured, for example, by the synthetic procedure of European Patent Application Publication No. 0 524 731 A1 of Hoover, page 5, Preparation 2.

Still other polysiloxane blocks are of formula (13): 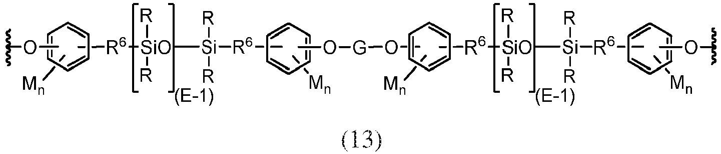 wherein R, E, R⁶, M, and n are as defined in formula (10), and G is a linking group, for example a group of the formula -C(=O)Ar¹C(=O)- wherein Ar¹ is a substituted or unsubstituted C₆-C₃₀ arylene, for example phenylene; a group of the formula - C(=O)NHAr²NHC(=O)- wherein Ar² is a substituted or unsubstituted C₆-C₃₀ arylene or a group of the formula -Ar^{2a}X^{a}Ar^{2a}- wherein each Ar^{2a} is independently a substituted or unsubstituted C₆-C₁₂ arylene and X^{a} is a single bond, -O-, -S-, -S(O)-, -S(O)₂-, -C(O)-, or a C₁-C₁₈ organic group bridging group connecting the two arylene groups, for example, a substituted or unsubstituted C₁-C₂₅ alkylidene of the formula -C(R^{c})(R^{d})- wherein R^{c} and R^{d} are each independently hydrogen, C₁-C₁₂ alkyl, C₁-C₁₂ cycloalkyl, C₇-C₁₂ arylalkyl, for example methylene, where the bridging group and the hydroxy substituent of each C₆ arylene group are disposed ortho, meta, or para (specifically para) to each other on the C₆ arylene group; or a group of the formula -P(=O)Ar³ wherein Ar³ is a substituted or unsubstituted C₆-C₃₀ arylene, for example phenylene.

The polysiloxane-polycarbonate copolymer may comprise carbonate units of formula (1) derived from bisphenol A, and polysiloxane units as described above, in particular polysiloxane units of formulas (10a), (10b), (10c), or a combination comprising at least one of the foregoing (specifically of formula 10a), wherein E has an average value of 1 to 1000, specifically 10 to 100, specifically 30 to 100, more specifically 30 to 60, more specifically 40 to 60, and still more specifically 40 to 50. The polysiloxane-polycarbonate copolymer can comprise the siloxane units in an amount of 0.1 to 60 weight percent (wt%), 0.5 to 55 wt%, 0.5 to 45 wt%, 0.5 to 30 wt%, or 0.5 to 20 wt%, based on the total weight of the polysiloxane-polycarbonate copolymer, with the proviso that the siloxane units are covalently bound to the polymer backbone of the polycarbonate copolymer. The transparent copolymers can be manufactured using one or both of the tube reactor processes described in U.S. Patent Application No. 2004/0039145A1 or the process described in U.S. Patent No. 6,723,864 can be used to synthesize the polysiloxane-polycarbonate copolymers.

In an embodiment, the polysiloxane-polycarbonate copolymer comprises a polysiloxane-polycarbonate block copolymer of bisphenol A blocks and eugenol capped polydimethylsilioxane blocks, of the formula (14): 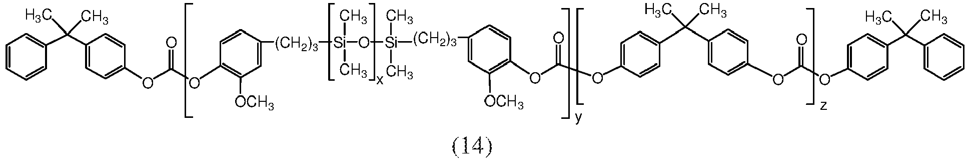 wherein x is 1 to 1000, 1 to 200, 20 to 200, 10 to 200, specifically 5 to 85, specifically 30 to 100, specifically 10 to 70, specifically 15 to 65, 30 to 60, and more specifically 40 to 50; y is 1 to 500, or 10 to 200, and z is 1 to 1000, or 10 to 800. In an embodiment, x is 1 to 200, y is 1 to 90 and z is 1 to 600, and in another embodiment, x is 30 to 50, y is 10 to 30 and z is 45 to 600. The polysiloxane blocks may be randomly distributed or controlled distributed among the polycarbonate blocks.

The polysiloxane-polycarbonate copolymer, such as a polydimethylsiloxane-polycarbonate copolymer, may include, by weight, 1% to 35% siloxane content (e.g., polydimethylsiloxane content), 1% to 30%, 2% to 30%, 15% to 30%, 2% to 25%, 5% to 25%, 6% to 20%, 18% to 22%, 4% to 8%, or 2% to 8% siloxane content. The polysiloxane-polycarbonate copolymer, such as a polydimethylsiloxane-polcarbonate copolymer, may include, by weight, 1%, 2%, 3%, 4%, 5%, 6%, 7%, 8%, 9%, 10%, 11%, 12%, 13%, 14%, 15%, 16 %, 17%, 18%, 19%, 20%, 21%, 22%, 23%, 24%, 25%, 26%, 27%, 28%, 29%, 30%, 31%, 32%, 33%, 34%, or 35% siloxane content. The polysiloxane-polycarbonate copolymer may include 6 wt% siloxane content. The polysiloxane-polycarbonate copolymer may include 20 wt% siloxane content. Siloxane content may refer to polydimethylsiloxane content.

The siloxane content of the blend compositions, contributed from the polysiloxane-polycarbonate copolymers of the composition, may be, by weight, 0.1% to 5.0%, 0.1% to 4.0%, 0.1% to 2.0%, 1.0% to 5.0%, 1.0% to 4.0%, 2.0% to 4.0%, 1.0% to 3.0%, or 1.0% to 2.0%. The siloxane content of the blend compositions, contributed from the polysiloxane-polycarbonate copolymers of the composition, may be, by weight, 1.0%, 1.1%, 1.2%, 1.3%, 1.4%, 1.5%, 1.6%, 1.7%, 1.8%, 1.9%, 2.0%, 3.0%, 4.0%, or 5.0%.

The polysiloxane-polycarbonate copolymer may have a weight average molecular weight of 17 kg/mol [^{±} 1kg/mol] to 40 kg/mol [^{±} 1kg/mol], 20 kg/mol [^{±} 1 kg/mol] to 40 kg/mol [^{±} 1 kg/mol], 20 kg/mol [^{±} 1 kg/mol] to 35 kg/mol [^{±} 1 kg/mol], 28 kg/mol [^{±} 1 kg/mol] to 32 kg/mol [^{±} 1kg/mol], 29 kg/mol [^{±} 1kg/mol] to 31 kg/mol [^{±} 1 kg/mol], 21 kg/mol [^{±} 1 kg/mol] to 25 kg/mol [^{±} 1 kg/mol], or 22 kg/mol [^{±} 1 kg/mol] to 24 kg/mol [^{±} 1 kg/mol]. The polysiloxane-polycarbonate copolymer may have a weight average molecular weight of 23 kg/mol, 23.8 kg/mol, 24 kg/mol, or 30 kg/mol. Weight average molecular weight can be determined by gel permeation chromatography (GPC) using BPA polycarbonate standards.

The polysiloxane-polycarbonate copolymer, such as a polydimethylsiloxane-polcarbonate copolymer, may be present in the blend compositions in an amount, by weight, ranging from 0 to 99%, 0 to 5%, 1 % to 5%, 2% to 4%, 1% to 50%, 5% to 40%, 20% to 40%, 1% to 30%, 1% to 15%, 1.5% to 5%, or 5% to 20%, based on total weight of the composition. The polysiloxane-polycarbonate copolymer, such as a polydimethylsiloxane-polycarbonate copolymer, may be present in the blend compositions in an amount, by weight, of 1%, 2%, 3%, 4%, 5%, 10%, 15%, 20%, 25%, 30%, 35%, 40%, 45%, 50%, 55%, 60%, 65%, 70%, 75%, 80%, 85%, 90%, 95%, or 99%, based on total weight of the composition.

In certain embodiments, the blend compositions include a polysiloxane-polycarbonate copolymer selected from the group consisting of: a BPA polycarbonate-polydimethylsiloxane copolymer comprising 20 wt% siloxane, having an average polydimethylsiloxane block length of 45 units, and having a weight average molecular weight of 30 kg/mol [^{±} 1 kg/mol]; and a BPA polycarbonate-polydimethylsiloxane copolymer comprising 6 wt% siloxane, having an average polydimethylsiloxane block length of 45 units, and having a weight average molecular weight of 23 kg/mol [^{±} 1 kg/mol]; or a combination thereof; wherein the weight average molecular weight is as determined by gel permeation chromatography (GPC) using BPA polycarbonate standards.

In certain embodiments, the blend compositions include a first polysiloxane-polycarbonate copolymer that is a transparent polysiloxane-polycarbonate copolymer. The transparent polysiloxane-polycarbonate copolymer is a BPA polycarbonate-polydimethylsiloxane copolymer comprising 6 wt% siloxane, having an average polydimethylsiloxane block length of 45 units, and having a weight average molecular weight of 23 kg/mol [^{±} 1 kg/mol]. In certain embodiments, the blend compositions include a second polysiloxane-polycarbonate copolymer that is an opaque polysiloxane-polycarbonate copolymer. The opaque polysiloxane-polycarbonate copolymer is a BPA polycarbonate-polydimethylsiloxane copolymer comprising 20 wt% siloxane, having an average polydimethylsiloxane block length of 45 units, and having a weight average molecular weight of 30 kg/mol [^{±} 1 kg/mol].

In certain embodiments, the ratio of the siloxane content (wt %) contributed from the first polysiloxane-polycarbonate copolymer to the siloxane content (wt %) contributed from the second polysiloxane-polycarbonate copolymer may be 0.2 to 5.0, 0.3 to 4.0, 0.3 to 3.0, 1 to 4, 2 to 4, or 3 to 4. The ratio of the siloxane content (wt %) contributed from the the first polysiloxane-polycarbonate copolymer to the siloxane content (wt %) contributed from the second polysiloxane-polycarbonate copolymer may be greater than or equal to 0.2, greater than or equal to 0.3, greater than or equal to 0.4, greater than or equal to 0.5, greater than or equal to 0.6, greater than or equal to 0.7, greater than or equal to 0.8, greater than or equal to 0.9, greater than or equal to 1.0, greater than or equal to 1.1, greater than or equal to 1.2, greater than or equal to 1.3, greater than or equal to 1.4, greater than or equal to 1.5, greater than or equal to 1.6, greater than or equal to 1.7, greater than or equal to 1.8, greater than or equal to 1.9, greater than or equal to 2.0, greater than or equal to 2.1, greater than or equal to 2.2, greater than or equal to 2.3, greater than or equal to 2.4, greater than or equal to 2.5, greater than or equal to 2.6, greater than or equal to 2.7, greater than or equal to 2.8, greater than or equal to 2.9, or greater than or equal to 3.0. The ratio of the siloxane content (wt %) contributed from the the first polysiloxane-polycarbonate copolymer to the siloxane content (wt %) contributed from the second polysiloxane-polycarbonate copolymer may be 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, or 5.0.

In certain embodiments, the ratio of the first polysiloxane-polycarbonate copolymer (wt %) to the second polysiloxane-polycarbonate copolymer (wt %) may be 3 to 20, 5 to 20, 7 to 20, 7 to 15, 7 to 12, 8 to 12, or 10 to 12. The ratio of the first polysiloxane-polycarbonate copolymer (wt %) to the second polysiloxane-polycarbonate copolymer (wt %) may be greater than or equal to 3, greater than or equal to 4, greater than or equal to 5, greater than or equal to 6, greater than or equal to 7, greater than or equal to 8, greater than or equal to 9, or greater than or equal to 10. The ratio of the first polysiloxane-polycarbonate copolymer (wt %) to the second polysiloxane-polycarbonate copolymer (wt %) may be 3, 4, 5, 6, 7, 8, 9, or 10.

In an embodiment, the total siloxane content (wt %) of the composition may be the total amount of siloxane contributed from the first polysiloxane-polycarbonate copolymer and the second polysiloxane-polycarbonate copolymer. In another embodiment, the total siloxane content (wt %) of the composition may also include siloxane contributed from an impact modifier such that the total siloxane content (wt%) of the composition may be the total amount of siloxane contributed from the first polysiloxane-polycarbonate copolymer, the second polysiloxane-polycarbonate copolymer, and the impact modifier; or the total siloxane content (wt%) of the composition may be the total amount of siloxane contributed from the first polysiloxane-polycarbonate copolymer and the impact modifier.

The total siloxane content of the composition, by weight, may be 0.1% to 5.0%, 0.1% to 4.0%, 0.1% to 2.0%, 1.0% to 4.0%, 1.0% to 3.0%, or 1.0% to 2.0%. The total siloxane content of the composition, by weight, may be greater than or equal to 0.2, greater than or equal to 0.3, greater than or equal to 0.4, greater than or equal to 0.5, greater than or equal to 0.6, greater than or equal to 0.7, greater than or equal to 0.8, greater than or equal to 0.9, greater than or equal to 1.0, greater than or equal to 1.1, greater than or equal to 1.2, greater than or equal to 1.3, greater than or equal to 1.4, greater than or equal to 1.5, greater than or equal to 1.6, greater than or equal to 1.7, greater than or equal to 1.8, greater than or equal to 1.9, greater than or equal to 2.0, greater than or equal to 2.1, greater than or equal to 2.2, greater than or equal to 2.3, greater than or equal to 2.4, greater than or equal to 2.5, greater than or equal to 2.6, greater than or equal to 2.7, greater than or equal to 2.8, greater than or equal to 2.9, greater than or equal to 3.0, greater than or equal to 3.1, greater than or equal to 3.2, greater than or equal to 3.3, greater than or equal to 3.4, greater than or equal to 3.5, greater than or equal to 3.6, greater than or equal to 3.7, greater than or equal to 3.8, greater than or equal to 3.9, greater than or equal to 4.0, greater than or equal to 4.1, greater than or equal to 4.2, greater than or equal to 4.3, greater than or equal to 4.4, greater than or equal to 4.5, greater than or equal to 4.6, greater than or equal to 4.7, greater than or equal to 4.8, greater than or equal to 4.9, or greater than or equal to 5.0. The total siloxane content of the composition, by weight, may be 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0.

### (i) End Capping Agents

End capping agents can be incorporated into the polycarbonates and polysiloxane-polycarbonate copolymers. Exemplary chain-stoppers include p-cumyl-phenol, resorcinol monobenzoate, p-tertiary-butylphenol, cresol, and monoethers of diphenols, such as p-methoxyphenol, cyanophenols, such as for example, 4-cyanophenol, 3-cyanophenol, 2-cyanophenol, and polycyanophenols, and alkyl-substituted phenols with branched chain alkyl substituents having 8 to 9 carbon atoms.

### (ii) Branching Groups

The polycarbonates and polysiloxane-polycarbonate copolymers may include branching groups, provided that such branching does not significantly adversely affect desired properties of the polycarbonate. Branched polycarbonate blocks can be prepared by adding a branching agent during polymerization. Exemplary branching agents include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. The branching agents can be added at a level of 0.05 to 6.0 wt %. Mixtures comprising linear polycarbonates and branched polycarbonates can be used.

### C. Flame Retardants

The compositions include one or more flame retardants. Various types of flame retardants can be utilized. In one embodiment, the flame retardant additives include, for example, flame retardant salts such as alkali metal salts of perfluorinated C₁-C₁₆ alkyl sulfonates such as potassium perfluorobutane sulfonate (Rimar salt), potassium perfluoroctane sulfonate, tetraethylammonium perfluorohexane sulfonate, potassium diphenylsulfone sulfonate (KSS), and the like, sodium benzene sulfonate, sodium toluene sulfonate (NATS) and the like; and salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as Na₂CO₃, K₂CO₃, MgCO₃, CaCO₃, and BaCO₃ or fluoro-anion complex such as Li₃AlF₆, BaSiF₆, KBF₄, K₃AlF₆, KAlF₄, K₂SiF₆, and/or Na₃AlF₆ or the like. Rimar salt and KSS and NATS, alone or in combination with other flame retardants, are particularly useful in the compositions disclosed herein.

The composition may comprise, by weight, 0.1% to 2%, 0.1% to 1.0%, 0.1% to 0.5%, 0.2% to 2%, 0.2% to 1.0%, 0.2% to 0.5%, or 0.2% to 0.4% of the flame retardant. The composition may comprise the flame retardant, by weight, in an amount greater than or equal to 0. 1 %, greater than or equal to 0.2%, greater than or equal to 0.3%, greater than or equal to 0.4%, greater than or equal to 0.5%, greater than or equal to 0.6%, greater than or equal to 0.7%, greater than or equal to 0.8%, greater than or equal to 0.9%, greater than or equal to 1.0%, greater than or equal to 1.1%, greater than or equal to 1.2%, greater than or equal to 1.3%, greater than or equal to 1.4%, or greater than or equal to 1.5%. The composition may comprise, by weight, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, or 2.0% of the flame retardant.

In an embodiment, the flame retardant of the composition is potassium diphenylsulfone sulfonate (KSS). In an embodiment, the composition comprises, by weight, 0.3% potassium diphenylsulfone sulfonate (KSS).

### D. Impact Modifiers

The compositions may include impact modifiers. Suitable impact modifiers may be high molecular weight elastomeric materials derived from olefins, monovinyl aromatic monomers, acrylic and methacrylic acids and their ester derivatives, as well as conjugated dienes. The blend composition formed from conjugated dienes can be fully or partially hydrogenated. The elastomeric materials can be in the form of homopolymers or copolymers, including random, block, radial block, graft, and core-shell copolymers. Combinations of impact modifiers may be used.

The impact modifier may be a siloxane core-acrylic shell based impact modifier. The impact modifier may be a siloxane core-acrylic shell based impact modifier comprising, by weight, 5%, 10%, 15%, 20%, 25%, 30%, 35%, 40%, 45%, 50%, 55%, 60%, 65%, 70%, 75%, 80%, 85%, 90%, 95%, or 99% siloxane.

A specific type of impact modifier may be an elastomer-modified graft copolymer comprising (i) an elastomeric (i.e., rubbery) polymer substrate having a Tg less than 10 °C, less than 0 °C, less than -10 °C, or between -40 °C to -80 °C, and (ii) a rigid polymer grafted to the elastomeric polymer substrate. Materials suitable for use as the elastomeric phase include, for example, conjugated diene rubbers, for example polybutadiene and polyisoprene; copolymers of a conjugated diene with less than 50 wt % of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric C₁-C₈ alkyl(meth)acrylates; elastomeric copolymers of C₁-C₈ alkyl(meth)acrylates with butadiene and/or styrene; or combinations comprising at least one of the foregoing elastomers. Materials suitable for use as the rigid phase include, for example, monovinyl aromatic monomers such as styrene and alpha-methyl styrene, and monovinylic monomers such as acrylonitrile, acrylic acid, methacrylic acid, and the C₁-C₆ esters of acrylic acid and methacrylic acid, specifically methyl methacrylate.

Specific impact modifiers include styrene-butadiene--styrene (SBS), styrenebutadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN). Exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN).

The composition may comprise the impact modifier in an amount, by weight, of 0.1% to 5.0%, 1.0 % to 5.0%, or 1.0% to 2.0%. The composition may comprise the impact modifier in an amount, by weight, of 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 4.0%, or 5.0%.

### E. Colorants

The compositions may include a colorant. The colorant may be a pigment and/or dye additive. Useful pigments may include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or combinations comprising at least one of the foregoing pigments. Pigments are generally used in amounts of 0.01% to 10% by weight, of the composition.

The composition may comprise the colorant in an amount, by weight, of less than or equal to 1.5%, less than or equal to 1.0%, or less than or equal to 0.5%. The composition may comprise the colorant in an amount, by weight, of 0.1% to 1.5%, 0.2 % to 1.5%, 0.25% to 1.5%, 0.25% to 0.5%, or 0.2% to 0.4%. The composition may comprise the colorant in an amount, by weight, of 0.2%, 0.25%, 0.3%, 0.4%, 0.5%, 0.6%, 0.7%, 0.8%, 0.9%, 1.0%, 1.1%, 1.2%, 1.3%, 1.4%, or 1.5%.

In an embodiment, the colorant is carbon black. In an embodiment, the composition comprises carbon black. In an embodiment, the composition comprises, by weight, 0.3% carbon black.

### F. Additional Components

The compositions may comprise additional components, including thermoplastics such as acrylonitrile butadiene styrene (ABS) and polybutylene terephthalate (PBT). Incorporation of these thermoplastics may be useful for improving the properties of the composition.

The compositions may also comprise additional components, such as one or more additives. Suitable additives include, but are not limited to anti-drip agents, UV stabilizers, colorants, flame retardants, heat stabilizers, plasticizers, lubricants, mold release agents, fillers, reinforcing agents, antioxidant agents, antistatic agents, blowing agents, and radiation stabilizers.

### (i) Anti-Drip Agents

The composition may comprise anti-drip agents. The anti-drip agent may be a fibril forming fluoropolymer such as polytetrafluoroethylene (PTFE). The anti-drip agent can be encapsulated by a rigid copolymer as described above, for example styrene-acrylonitrile copolymer (SAN). PTFE encapsulated in SAN is known as TSAN. Encapsulated fluoropolymers can be made by polymerizing the encapsulating polymer in the presence of the fluoropolymer, for example an aqueous dispersion. TSAN can provide significant advantages over PTFE, in that TSAN can be more readily dispersed in the composition. An exemplary TSAN can comprise 50 wt % PTFE and 50 wt % SAN, based on the total weight of the encapsulated fluoropolymer. The SAN can comprise, for example, 75 wt % styrene and 25 wt % acrylonitrile based on the total weight of the copolymer. Alternatively, the fluoropolymer can be pre-blended in some manner with a second polymer, such as for, example, an aromatic polycarbonate or SAN to form an agglomerated material for use as an anti-drip agent. Either method can be used to produce an encapsulated fluoropolymer.

The composition may comprise the anti-drip in an amount, by weight, 0.1% to 1.0%, or 0.1% to 0.8%. The composition may comprise the anti-drip in an amount by weight, of 0.1%, 0.2%, 0.3%, 0.4%, 0.5%, 0.6%, 0.7%, 0.8%, 0.9%, or 1.0%.

### (ii) UV Stabilizers

The composition may comprise a UV stabilizer for improved performance in UV stabilization.

### (iii) Heat Stabilizers

The composition may comprise heat stabilizers. In certain embodiments, the heat stabilizer is tetrakis(2,4-di-tert-butylphenyl)[1,1-biphenyl]-4,4'diylbisphosphonite. Heat stabilizers are generally used in amounts, by weight, of 0.0001% to 1% of the blend composition.

### (iv) Plasticizers, Lubricants, Mold Release Agents

The composition may comprise plasticizers, lubricants, and mold release agents. Such materials are generally used in amounts, by weight, of 0.001% to 1%, 0.01% to 0.75%, or 0.1% to 0.5% of the blend composition.

### (v) Antioxidant Additives

The composition may comprise an antioxidant additive. Antioxidants are generally used in amounts, by weight, of 0.0001% to 1% of the blend composition.

### 3. Properties of the Compositions

The blend compositions may have a combination of desired properties.

The presence of an amount of opaque polysiloxane-polycarbonate copolymer in the composition may help to impart impact strength to the composition, while incorporation of a transparent polysiloxane-polycarbonate copolymer may help to improve aesthetic properties such as the reduction of color streaks and a decrease in knitline visibility in articles manufactured from the composition. In particular, when both opaque and transparent polysiloxane-polycarbonate copolymers are present in the composition, it is particularly useful for the composition to have a ratio of the siloxane content (wt %) contributed from the transparent polysiloxane-polycarbonate copolymer to the siloxane content (wt %) contributed from the opaque polysiloxane-polycarbonate of greater than 0.3, or greater than 2.0. Incorporation of an impact modifier may also improve the impact resistance of the composition without sacrificing the aesthetics of the composition. Accordingly, the composition has useful impact and aesthetic properties as imparted by a specified combination of polysiloxane-polycarbonate copolymers.

### A. Melt Volume Flow Rate

Melt volume flow rate (often abbreviated MVR) of the blend compositions may be determined using ISO 1133 or ASTM D1238. MVR measures the volume of a composition extruded through an orifice at a prescribed temperature and load over a prescribed time period. The higher the MVR value of a polymer composition at a specific temperature, the greater the flow of that composition at that specific temperature.

MVR may be measured, for example, by packing a small amount of polymer composition into an extruder barrel of an extruder. The composition may be preheated for a specified amount of time at a particular temperature (the test temperature is usually set at or slightly above the melting region of the material being characterized). After preheating the composition, a particular weight (e.g., a 2.16 kg weight) may be introduced to a piston, which acts as the medium that causes extrusion of the molten polymer composition. The weight exerts a force on the piston and thereby the molten polymer composition, and the molten composition flows through the dye wherein the displacement of the molten composition is measured in cubic centimeters per over time such as 10 minutes (cm³/10 min).

The compositions may have a MVR of 1 cm³/10 min to 100 cm³/10 min, 2 cm³/10 min to 80 cm³/10 min, 3 cm³/10 min to 60 cm³/10 min, 4 cm³/10 min to 40 cm³/10 min, 5 cm³/10 min to 20 cm³/10 min, 10 cm³/10 min to 20 cm³/10 min, 10 cm³/10 min to 16 cm³/10 min, or 10 cm³/10 min to 14 cm³/10 min using the ASTM D1238 method, 1.2 kg load, 300 °C temperature, 300 or 900 second dwell. The compositions may have a MVR of 2 cm³/10 min or greater, 5 cm³/10 min or greater, 6 cm³/10 min or greater, 7 cm³/10 min or greater, 8 cm³/10 min or greater, 9 cm³/10 min or greater, 10 cm³/10 min or greater, 11 cm³/10 min or greater, 12 cm³/10 min or greater, 13 cm³/10 min or greater, 14 cm³/10 min or greater, 15 cm³/10 min or greater,or 20 cm³/10 min or greater, using the ASTM D1238 method, 1.2 kg load, 300 °C temperature, 300 or 900 second dwell.

### B. Notched Izod Impact

The blend compositions may have a notched Izod impact (NII) energy, measured at 23 °C, according to ASTM D256. ASTM D256 impact energy is expressed in J/m or ft-lb/in. Impact strength can be calculated by dividing impact energy in Joules (J) (or foot-pound (ft-1b)) by the thickness of the specimen. The test result is typically the average of 5 specimens with a thickness of 3.2 millimeters mm. A higher NII value indicates better impact strength. The compositions may have a notched izod impact energy of greater than or equal to 600 Joules per meter (J/m), greater than or equal to 700 J/m, greater than or equal to 800 J/m, greater than or equal to 820 J/m², greater than or equal to 840 J/m, greater than or equal to 850 J/m, greater than or equal to 860 J/m, greater than or equal to 870 J/m, greater than or equal to 880 J/m, greater than or equal to 890 J/m, greater than or equal to 900 J/m, or greater than or equal to 905 J/m, measured at 23 °C, according to ASTM D256 on a molded part having a thickness of 3.2 mm.

### C. Ductile to Brittle Transition Temperature

The notched Izod impact test can be used to determine the ductile-to-brittle transition of the blend compositions as the temperature is decreased. The ductile to brittle transition temperature (DBTT) represents the point at which the fracture energy passes below a point at which the fracture becomes more brittle. Once a material is cooled below its DBTT, it has a much greater tendency to shatter on impact instead of bending or deforming.

The blend compositions may have a ductile to brittle transition temperature of less than or equal to 20 °C, less than or equal to 15 °C, less than or equal to 10 °C, less than or equal to 0 °C, less than or equal to -10 °C, less than or equal to -20 °C, less than or equal to - 30 °C, or less than or equal to -40 °C as measured using the notched Izod impact test, according to ASTM D256 on a molded part having a thickness of 3.2 mm.

### D. Ball Drop Test

The composition may also be evaluated by an additional method of determining the impact resistance. This test includes the steps of dropping on a molded plaque, from a height of 1.36 m, a metallic sphere, having a weigh of 500 g, and a diameter of 50 mm. The plaque has a thickness of 2.5 mm. The material, of which the plaque is made, passes the test and receives an "ok" rating if no fracture or breakage is observed.

### E. Flame Retardancy

A material comprising the composition may achieve a high probability of first time pass "p(FTP)" that a particular sample formulation will achieve a UL 94 V0 "pass" rating in the conventional UL 94 testing of 5 bars. A "high probability of first time pass" may refer to a sample achieving a p(FTP) of 0.85 to 1.00. In certain embodiments, a probability of first time pass of 0.85 to 1 .00 may be defined as passing the UL 94 V0 flame performance test.

A material comprising the composition may be UL94 V0 compliant. A flame bar comprising the composition may achieve a UL94 V0 rating. A flame bar comprising the composition, may achieve a UL94 V0 rating at a thickness of: 3.0 mm, 2.9 mm, 2.8 mm, 2.7 mm, 2.6 mm, 2.5 mm, 2.4 mm, 2.3 mm, 2.2 mm, 2.1 mm, 2.0 mm, 1.9 mm, 1.8 mm, 1.7 mm, 1.6 mm, 1.5 mm, 1.4 mm, 1.3 mm, 1.2 mm, 1.1 mm, 1.0 mm, 0.9 mm, 0.8 mm, 0.7 mm, 0.6 mm, or 0.5 mm. A flame bar comprising the composition may demonstrate a high probability of first time pass (pFTP) of the UL94 V0 test at a thickness of: 3.0 mm, 2.9 mm, 2.8 mm, 2.7 mm, 2.6 mm, 2.5 mm, 2.4 mm, 2.3 mm, 2.2 mm, 2.1 mm, 2.0 mm, 1.9 mm, 1.8 mm, 1.7 mm, 1.6 mm, 1.5 mm, 1.4 mm, 1.3 mm, 1.2 mm, 1.1 mm, 1.0 mm, 0.9 mm, 0.8 mm, 0.7 mm, 0.6 mm, or 0.5 mm.

In certain embodiments, a material comprising the composition may be UL94 V0 compliant, UL94 V1 compliant, or UL94 V2 compliant.

### F. Color Capability

The composition can have a deep black color capability. The deep black color capability is represented by L^{∗}, which is the lightness attribute of the L^{∗}a^{∗}b^{∗} model. The darkest black is at L^{∗} = 0, while the brightest white is at L^{∗} = 100. L^{∗} may be measured in reflectance mode using the CIELAB method in accordance with ASTM D2244 at an angle of 10° observer with the specular component excluded and using the CIE standard daylight illuminant D65. The composition may have a L^{∗} value of 1 to 100. The composition may have a L^{∗} value of less than or equal to 10, less than or equal to 9, less than or equal to 8, less than or equal to 7, less than or equal to 6, less than or equal to 5, less than or equal to 4, less than or equal to 3, less than or equal to 2, or less than or equal to 1. The composition may have a L^{∗} value of 1 to 8, 2 to 8, 2 to 7, 2 to 6, 2 to 5, 2 to 4, or 2 to 3. The composition may have a L^{∗} value of 1, 2, 3, 4, 5, 6, 7, or 8. The composition may have a L^{∗} value of greater than or equal to 90, greater than or equal to 91, greater than or equal to 92, greater than or equal to 93, greater than or equal to 94, greater than or equal to 95, greater than or equal to 96, greater than or equal to 97, greater than or equal to 98, or greater than or equal to 99.

### G. Knitline Visibility

The composition may have improved knitline visibility. As used herein, "less knitline" or "invisible knitline" means free of visually observable knitline, as determined using the naked eye at a suitable distance. The appearance of an injection-molded article can be assessed qualitatively by visual appearance of the injection-molded article by comparison to a master standard having acceptable appearance. Alternatively, the injection-molded article can be compared to an injection-molded article comprising a reference composition. The comparison can be conducted using the naked eye under a set of lights selected for optimum viewing, wherein the optimal lighting conditions can be selected for the color and/or filler content of the injection-molded article, and at a suitable distance between the viewer and the article, typically 30 to 150 cm. Alternatively, knitline can be assessed by ranking plaque samples for knitline visibility on the basis of visual examination. The appearance of the injection molded plaques can be evaluated on a scale of 1-5, indicating different levels of knitline visibility. A rating of 5 means there are no visible knitlines, while a rating of 1 indicates knitlines are easily visible.

In certain embodiments, a molded plaque or chip of the composition has a knitline visibility of 1, 2, 3, 4, or 5 as determined visually by the above described method. In a preferred embodiment, a molded plaque or chip of the composition has a knitline visibility of 4. In another preferred embodiment, a molded plaque or chip of the composition has a knitline visibility of 5.

### H. Relative Temperature Index

The composition may possess an Underwriters Laboratories Relative Temperature Index (RTI) measured using UL 746. UL RTI refers to a material's thermal endurance. In particular, UL RTI can be used to determine the maximum service temperature for a material where specific properties (e.g., impact resistance) are not unacceptably compromised. The maximum service temperature may be defined by the RTI electrical (associated with critical electrical insulating properties), RTI mechanical with impact (associated with critical impact resistance, resilience and flexibility properties), and/or the RTI mechanical without impact (associated with critical mechanical strength where impact resistance, resilience and flexibility are not essential), according to UL 746. The disclosed compositions may possess RTI with impact when measured at 100°C or greater, 105°C or greater, 110°C or greater, or 115°C or greater, according to UL 746. In certain embodiments, the compositions may possess an RTI w/impact at a temperature of 115°C, measured using UL 746.

### 4. Methods of Preparing the Blend Compositions

The compositions disclosed herein can be manufactured without undue experimentation by using various known methods for preparing blend compositions.

### 5. Articles

Articles comprising the disclosed compositions are provided herein. The compositions can be molded into useful shaped articles such as, for example, various components for cell phones and cell phone covers, components for computer housings, computer housings and business machine housings such as housings for monitors, handheld electronic device housings such as housings for cell phones, electrical connectors, and components of lighting fixtures, ornaments, home appliances, roofs, greenhouses, sun rooms, swimming pool enclosures, Light Emitting Diodes (LEDs), light panels, and extruded film and sheet articles.

Additional examples of articles that can be formed from the compositions include electrical parts, such as relays, and enclosures, consumer electronics such as enclosures and parts for laptops, desktops, docking stations, PDAs, digital cameras, desktops, and telecommunications parts such as parts for base station terminals. As noted above, the disclosed composites are well suited for use in the manufacture of electronic components and devices. As such, according to some aspects, the disclosed composites can be used to form articles such as printed circuit board carriers, burn in test sockets, and flex brackets for hard disk drives.

The article may be a component for an electronic device, or the article may be an electronic device, automotive device, telecommunication device, medical device, security device, or mechatronic device. The article may be a computer device, electromagnetic interference device, printed circuit, Wi-Fi device, Bluetooth device, GPS device, gaming device, cellular antenna device, smart phone device, a laptop computer, a tablet computer, an e-reader device, a copier device, automotive device, medical device, sensor device, security device, shielding device, RF antenna device, LED device, RFID device, LED tube, a LED socket, or a LED heat sink. For example, the article can be a component of a smart phone. The disclosed compositions are of particular utility in the manufacture of thin walled articles, such as housings for electronic devices. As such, the article maybe a component for an electronic housing, such as a component for a cell phone, smart phone, GPS device, laptop computer, tablet computer, e-reader, or copier. Molded articles of the composition can be used to manufacture devices in the automotive field. Non-limiting examples of such devices in the automotive field include adaptive cruise control, headlight sensors, windshield wiper sensors, door/window switches, pressure and flow sensors for engine management, air conditioning, crash detection, and exterior lighting fixtures. The article may be an outdoor electric enclosure. The article may be a component of an electric vehicle charging system, a component of a photovoltaic junction connector or photovoltaic junction box. In various aspects, the disclosure pertains to articles of manufacture, comprising: a molded body formed from a polycarbonate composition; wherein the molded body has at least one surface exhibiting at least one improved surface appearance property; and wherein the polycarbonate blend composition comprises a means for providing the at least one improved surface appearance property. In a further aspect, the polycarbonate blend composition is any of the polycarbonate blend composition disclosed herein.

### 6. Methods of Preparing the Articles

The article may be produced by a manufacturing process. The process may include (a) providing a polycarbonate composition as disclosed herein; (b) melting the composition, for example at 200-400°C, 200-300°C, 225-350°C, or 270-300°C in an extruder; (c) extruding the composition; and (d) isolating the composition. The article may be further produced by (e) drying the composition and (f) melt forming the composition.

The polycarbonate compositions may be molded into useful shaped articles described above by a variety of methods, such as injection molding, extrusion, rotational molding, compression molding, blow molding, sheet or film extrusion, profile extrusion, gas assist molding, structural foam molding, and thermoforming. Additional fabrication operations for preparing the articles include, but are not limited to, molding, in-mold decoration, baking in a paint oven, lamination, metallization, and/or thermoforming.

### 8. Examples

All parts and percentages are by weight. Molecular weight determinations were performed using gel permeation chromatography (GPC), using a cross-linked styrenedivinylbenzene column and calibrated to bisphenol-A polycarbonate standards using a UV-VIS detector set at 254 nm. Samples were prepared at a concentration of approximately 1 mg/mL, and eluted at a flow rate of approximately 1.0 mL/min.

Table 1 summarizes the exemplary materials components of the polycarbonate blend compositions. The listed copolymers and polycarbonate resins were prepared by methods known in the art. All other chemical entities were purchased from the commercial sources listed.

**Table 1.**

| | | |
|---|---|---|
| PC-1 | Linear Bisphenol A Polycarbonate, produced via interfacial polymerization, Mw 29,900 g/mol [^{±} 1,000 g/mol] as determined by GPC using polycarbonate standards, phenol end-capped | SABIC-IP |
| PC-2 | Linear Bisphenol A Polycarbonate, produced via interfacial polymerization, Mw 21,900 g/mol [^{±} 1,000 g/mol] as determined by GPC using polycarbonate standards, phenol end-capped | SABIC-IP |
| PC-Si-1 | PDMS (polydimethylsiloxane) - Bisphenol A Polycarbonate copolymer, produced via interfacial polymerization (tube process), 6 wt% siloxane, average PDMS block length of 45 units (D45), Mw 23,800 g/mol [^{±} 1,000 g/mol] as determined by GPC using polycarbonate standards, para-cumylphenol (PCP) end-capped. | SABIC-IP |
| PC-Si-2 | PDMS (polydimethylsiloxane) - Bisphenol A Polycarbonate copolymer, produced via interfacial polymerization, 20 wt% siloxane, average PDMS block length of 45 units (D45), Mw 30,000 g/mol [^{±} 1,000 g/mol] as determined by GPC using polycarbonate standards, para-cumylphenol (PCP) end-capped. | SABIC-IP |
| IM-1 | Methyl methacrvlate-butadiene-stvrene powder | Dow |
| IM-2 | Core-shell siloxane impact modifier (~10 wt% siloxane) | Mitsubishi |
| KSS | Potassi um 3-(phenylsulfonyl)benzenesulfonate | METROPOLITAN EXIMCHEM LTD |
| NaTs | Sodium toluene sulfonate | Aldrich |
| BPADP | Bisphenol A bis-(diphenyl phosphate) | DAIHACHI CHEMICAL |
| TSAN | Styrene-acrylonitrile encapsulated PTFE | SABIC-IP |
| PETS | Pentaerythritol tetrastearate | Faci |
| PHOS | Tris(2,4-di-tert-butylphenyl)phosphite | Ciba |
| Irganox 1076 | Octadecyl-(3,5-ditertbutyl-4-hydroxyphenyl) propionate | Ciba |
| CB | Carbon Black | Cabor |

Unless otherwise noted below, the compositions described herein comprise in addition to the indicated components, 0.06% PHOS or 0.06% Irganox 1076, or a combination of the two that totals 0.06% of the composition.

### Compounding Conditions

For each composition, all the ingredients were blended and extruded by use of an L-3-2 twin screw extruder, according to the extrusion profiles indicated in Table 2.

**Table 2.**

| **Extrusion Profile** | |
|---|---|
| Barrel Size | 1500 mm |
| Die | 3 mm |
| Zone 1 Temp | 50°C |
| Zone 2 Temp | 100°C |
| Zone 3 Temp | 270°C |
| Zone 4 Temp | 270°C |
| Zone 5 Temp | 270°C |
| Zone 6 Temp | 270°C |
| Zone 7 Temp | 270°C |
| Zone 8 Temp | 270°C |
| Zone 9 Temp | 270°C |
| Zone 10 Temp | 270°C |
| Die Temp | 270°C |
| Screw speed | 400 rpm |
| Throughput | 40 kg/hr |
| Torque | 30% |
| Vacuum 1 | -0.08 MPa |
| Side Feeder 1 speed | 250 rpm |

Molding was performed according to the injection molding profiles indicated in Table 3. Dried pellets were injection molded into a FANUC molding machine to form appropriate test samples.

**Table 3.**

| **Injection Molding Process** | |
|---|---|
| Pre-drying time | 3 hr |
| Pre-drying temp | 120°C |
| Hopper temp | 50°C |
| Zone 1 temp | 275°C |
| Zone 2 temp | 285°C |
| Zone 3 temp | 290°C |
| Nozzle temp | 285°C |
| Mold temp | 80°C |
| Screw speed | 100 rpm |
| Back pressure | 68 kgf/cm² |

### Testing Conditions

All testing was performed with pellets or standard test specimens. Extruded pellets were dried in a dehumidifying dryer for 4 hours at 120°C. Heat distortion temperature ("HDT") was determined in accordance with ASTM D648 at 1.8 megaPascal (MPa) on samples of 3.2 mm thickness. Notched Izod impact Energy ("NII") was determined in accordance with ASTM D256 under a load of 5 pound-force (1b-f) at 23 °C for standard measures, and other temperatures as discussed herein in order to determine the ductile-brittle transition temperature. All NII determinations were carried out on sample plaques of 3.2 mm thickness. Ductility was measured by notched-Izod impact testing over a range from room temperature (~23 °C) down to -40 °C. The ductile-brittle transition temperature, defined as the temperature where the samples transition from 100% ductile to 100% brittle in the notched Izod impact test was determined. Flame retardance was measured by use of the UL 94 rating system on a flame bar with 1.2 mm thickness (127 x 12.7 x 1.2 mm). Flame retardance was measured to determine a V0 rating. Melt volume rate ("MVR") was determined in accordance with ASTM D1238 under a load of 1.2 kg at 300 °C. Knitline visibility was determined by visual inspection on a molded Borg chip and given a score of 1-5. A score of 5 indicated no knitlines were visible. The ball drop test was achieved on 2.5 mm thick color chips. A 500 grams (g) steel ball was dropped from a height of 1.36 meter (m). A result with no crack in the chip resulted in a rating of "ok". Color data for samples (color chip with 2.5 mm thickness) were obtained following a Sabic internal method. CIE1976 LAB color data and reflection curves were acquired on an X-Rite ColorEye 7000A with D65 illumination, 10° observer, UV included, reflection mode. Specular Component Excluded (SCE) mode was used to exclude specular reflected light and give results independent of surface gloss.

### Example 1. Compositions comprising polycarbonate and PC-siloxane copolymer

A series of polycarbonate compositions were made varying the total amount of siloxane (wt%) from the two PC-siloxane copolymer sources and varying the ratio of the two copolymers (compositions **1-4**; Table 4). Impact and appearance properties were evaluated. An increase in the PC-Si-1:PC-Si-2 ratio resulted in improved knitline visibility. Impact properties, as evidenced by an increase in N11 energy, were also improved as the amount of PC-siloxane copolymer was increased. Flame retardance was also excellent in all the compositions.

**Table 4.**

| **Composition** | **1** | **2** | **3** | **4** |
|---|---|---|---|---|
| PC-1 (%) | 25 | 36 | 31 | 26 |
| PC-2 (%) | 61.29 | 40.59 | 34.59 | 28.59 |
| PC-Si-1 (%) | 5 | 20 | 30 | 40 |
| PC-Si-2 (%) | 7 | 2 | 3 | 4 |
| KSS (%) | 0.3 | 0.3 | 0.3 | 0.3 |
| TSAN (%) | 0.4 | 0.4 | 0.4 | 0.4 |
| CB (%) | 0.3 | 0.3 | 0.3 | 0.3 |
| total siloxane content (wt %) | 1.7 | 1.6 | 2.4 | 3.2 |
| PC-Si-1:PC-Si-2 ratio | 0.7 | 10 | 10 | 10 |
| Ratio of siloxane content (PC-Si-1:PC-Si-2) | 0.2 | 3 | 3 | 3 |
| MVR (cm³/10 min) | 15.7 | 12.6 | 12.5 | 11.3 |
| NII, 23°C (J/m) | 877 | 893 | 907 | 909 |
| Ductile to Brittle Transition (°C) | -10 | -10 | -20 | -30 |
| Ball drop test | ok | ok | ok | ok |
| L^{∗} (SCE) | 3.18 | 2.2 | 2.4 | 2.3 |
| Knitline visibility | 3 | 5 | 5 | 5 |
| FR rating VO 1.2 mm | yes | yes | yes | yes |

### Example 2. Compositions comprising polycarbonate and impact modifier

Additional studies included the comparison of compositions with varying amounts of PC-siloxane copolymer and an impact modifier (Table 5). Incorporation of impact modifier, IM-1, resulted in high knitline visibility, lower ductile to brittle transition temperature, and high impact energy (compositions **5** and **8**). However, the type of impact modifier incorporated in compositions with lower amounts of PC-polysiloxane had an effect on impact and appearance properties, as compositions with IM-1 (compositions **6** and **7**) had improved impact and appearance properties over compositions with IM-2 (compositions **9** and **10**). In addition, the deep black color capability remained high in all the compositions made.

**Table 5.**

| **Composition** | **1** | **4** | **5** | **6** | **7** | **8** | **9** | **10** |
|---|---|---|---|---|---|---|---|---|
| PC-1 (%) | 25 | 26 | 27 | 27 | 30 | 27 | 27 | 30 |
| PC-2 (%) | 61.29 | 28.59 | 26.23 | 61.58 | 61.58 | 26.23 | 61.58 | 61.58 |
| PC-Si-1 (%) | 5 | 40 | 40 | 5 | 5 | 40 | 5 | 5 |
| PC-Si-2 (%) | 7 | 4 | 4 | 4 | - | 4 | 4 | - |
| IM-1 (%) | - | -- | 1 | 1 | 2 | - | - | - |
| IM-2 (%) | - | - | - | - | - | 1 | 1 | 2 |
| KSS (%) | 0.3 | 0.3 | 0.3 | 0.3 | 0.3 | 0.3 | 0.3 | 0.3 |
| TSAN (%) | 0.4 | 0.4 | 0.4 | 0.4 | 0.4 | 0.4 | 0.4 | 0.4 |
| CB (%) | 0.3 | 0.3 | 0.3 | 0.3 | 0.3 | 0.3 | 0.3 | 0.3 |
| total siloxane content (wt %) | 1.7 | 3.2 | 3.2 | 1.1 | 0.3 | 3.3 | 1.2 | 0.5 |
| PC-Si-1:PC-Si-2 ratio | 0.7 | 10 | 10 | 1.25 | - | 10 | 10 | - |
| Ratio of siloxane content (PC-Si-l:PC-Si-2) | 0.2 | 3 | 3 | 0.4 | - | 3 | 0.4 | - |
| MVR (cm³/10 min) | 15.7 | 11.3 | 11.4 | 14.7 | 14.6 | 11.1 | 14.7 | 14.5 |
| NII, 23°C (J/m) | 877 | 909 | 891 | 874 | 807 | 885 | 865 | 833 |
| Ductile to Brittle Transition (°C) | -10 | -30 | -40 | -20 | -20 | -40 | -10 | -10 |
| Ball drop test | ok | ok | ok | ok | ok | ok | ok | ok |
| L^{∗} (SCE) | 3.18 | 2.3 | 2.83 | 2.92 | 2.6 | 5.1 | 5.77 | 7.11 |
| Knitline visibility | 3 | 5 | 5 | 4 | 4 | 5 | 1 | 2 |
| FR rating VO 1.2 mm | yes | yes | no | yes | yes | no | yes | yes |

### Example 3. Compositions comprising different flame retardants

Composition **2** was modified to replace KSS with different flame retardants. Replacement of KSS with NaTs, also a sulfonate, provided a composition with good mechanical properties, but a reduction in flame retardance (composition **11**). Replacement of KSS with a phosphorous-based flame retardant, BPADP, resulted in a reduction in HDT and impact properties (compositions **12** and **13**). These data demonstrate that use of KSS in the composition provides a composition that possesses the requisite mechanical properties and flame retardance needed for a polycarbonate composition that is useful in thin wall applications. In comparison of compositions **2** and **11** it can be noted that use of KSS, a sulfonate flame retardant, provided superior flame retardance over NaTs, also a sulfonate flame retardant. Composition **13** demonstrates that by using BPADP, this grade can have V0@ 1.2 mm but loses RTI w/Imp. Therefore, KSS can bestow the FR performance at V0@ 1.2 mm with RTI w/Imp measured at 115°C.

## Claims

1. An electronics housing comprising a thermoplastic composition comprising:
(a) 25 wt% to 40 wt% of a first polycarbonate that is a BPA polycarbonate having a weight average molecular weight of 20 kg/mol [^{±} 1 kg/mol] to 32 kg/mol [^{±} 1 kg/mol], preferably 25 kg/mol [^{±} 1 kg/mol] to 32 kg/mol [^{±} 1 kg/mol], as determined by gel permeation chromatography (GPC) using BPA polycarbonate standards;
(b) 25 wt% to 65wt% of a second polycarbonate that is a BPA polycarbonate having a weight average molecular weight of 20 kg/mol [^{±} 1 kg/mol] to 32 kg/mol [^{±} 1 kg/mol], preferably 20 kg/mol [^{±} 1 kg/mol] to 24 kg/mol [^{±} 1 kg/mol], as determined by gel permeation chromatography (GPC) using BPA polycarbonate standards; provided the second polycarbonate is different from the first polycarbonate;
(c) 5 wt% to 40 wt% of a first polysiloxane-polycarbonate copolymer that is a BPA polysiloxane-polycarbonate copolymer produced by interfacial polymerization, comprising 4 wt% to 8 wt% siloxane, having an average polydiorganosiloxane block length of 40 to 50 units, and having a weight average molecular weight of 21 kg/mol [^{±} 1 kg/mol] to 25 kg/mol [^{±} 1 kg/mol], as determined by gel permeation chromatography (GPC) using BPA polycarbonate standards;
(d) 1 wt% to 5 wt% of a second polysiloxane-polycarbonate copolymer that is a BPA polysiloxane-polycarbonate copolymer produced by interfacial polymerization, comprising 18 wt% to 22 wt% siloxane, having an average polydiorganosiloxane block length of 40 to 50 units, and having a weight average molecular weight of 28 kg/mol [^{±} 1 kg/mol] to 32 kg/mol [^{±} 1 kg/mol], as determined by gel permeation chromatography (GPC) using BPA polycarbonate standards;
(e) 0.2 wt% to 1 wt% of a flame retardant that is potassium diphenylsulfone sulfonate (KSS);
(f) 0.1 wt% to 1 wt% of an anti-drip agent; wherein the composition has a total siloxane content of 1 wt% to 4 wt%; and
(g) 0 to 5wt.% of an impact modifier, provided that the combined wt.% value of all components does not exceed 100 wt%,
wherein the ratio of the siloxane content (wt%) contributed from the first polysiloxane-polycarbonate copolymer to the siloxane content (wt%) contributed from the second polysiloxane-polycarbonate copolymer is 3 to 4,
a flame bar comprising the composition achieves a UL94 V0 rating at a thickness of 1.2 mm; wherein the composition has a melt volume rate (MVR) of 10 cm³/10 min to 25 cm³/10 min at 300°C with a 1.2 kg load, as measured according to ASTM D1238; and wherein the composition has a notched izod impact energy of at least 800 J/m, as measured in a notched izod impact test at 23°C in accordance with ASTM D256 on a molded part having a thickness of 3.2 mm.

2. The electronics housing of claim 1, wherein the ratio of the first polysiloxane-polycarbonate copolymer (wt%) to the second polysiloxane-polycarbonate copolymer (wt%) is 8 to 12.

3. The electronics housing of any one of claims 1-2, wherein the composition has a total siloxane content, by weight, of 1% to 2%.

4. The electronics housing of any one of claims 1-3, further comprising the impact modifier.

5. The electronics housing of any one of claims 1-4, wherein the composition has a ductile to brittle transition temperature of less than or equal to -10°C, determined in accordance with ASTM D256 on a molded part having a thickness of 3.2 mm.

6. The electronics housing of any one of claims 1-5, comprising 20 wt% to 40 wt% of the first polysiloxane-polycarbonate copolymer.

7. The electronics housing of any one of claims 1-6, comprising 2 wt% to 4 wt% of the second polysiloxane-polycarbonate copolymer.

8. The electronics housing of any one of claims 1-7, wherein the anti-drip agent is styrene-acrylonitrile encapsulated PTFE (TSAN).

9. The electronics housing of any one of claims 4-8, wherein the impact modifier is:
(a) a siloxane core-acrylic shell based impact modifier comprising 10 wt% siloxane; or (b) a methyl methacrylate-butadiene-styrene powder.

10. The electronics housing of any one of claims 1-9, wherein the composition further comprises, by weight, 0.3% carbon black.

11. The electronics housing of any one of claims 1-10, wherein the composition has a L^{∗} value of less than or equal to 8, with the specular component excluded, as determined according to ASTM D2244 on a molded color chip having a thickness of 2.5 mm.

12. The electronics housing of any one of claims 1-11, wherein the electronics housing has no visible knitlines.

13. The electronics housing of any one of claims 1-12, wherein the electronics housing has relative temperature index (RTI) with impact performance, measured at 115°C according UL 746.

14. The electronics housing of any one of claims 1-13, wherein the composition is selected from the group consisting of: (a) a composition comprising, by weight, 36% of the first polycarbonate; 41% of the second polycarbonate; 20% of the first polycarbonate-siloxane copolymer; 0.3% KSS; 0.4% of the anti-drip agent; and 2% of the second polycarbonate-siloxane copolymer; (b) a composition comprising, by weight, 31% of the first polycarbonate; 35% of the second polycarbonate; 30% of the first polycarbonate-siloxane copolymer; 0.3% KSS; 0.4% of the anti-drip agent; and 3% of the second polycarbonate-siloxane copolymer; (c) a composition comprising, by weight, 26% of the first polycarbonate; 29% of the second polycarbonate; 40% of the first polycarbonate-siloxane copolymer; 0.3% KSS; 0.4% of the anti-drip agent; and 4% of the second polycarbonate-siloxane copolymer; (d) a composition comprising, by weight, 27% of the first polycarbonate; 26% of the second polycarbonate; 40% of the first polycarbonate-siloxane copolymer; 0.3% KSS; 0.4% of the anti-drip agent; 4% of the second polycarbonate-siloxane copolymer; and 1% of the impact modifier; and (e) a composition comprising, by weight, 27% of the first polycarbonate; 62% of the second polycarbonate; 5% of the first polycarbonate-siloxane copolymer; 0.3% KSS; 0.4% of the anti-drip agent; 4% of the second polycarbonate-siloxane copolymer; and 1% of the impact modifier.

## Patentansprüche

1. Ein Elektronikgehäuse, das eine thermoplastische Zusammensetzung umfasst, welche Folgendes umfasst:
(a) 25 bis 40 Gewichtsprozent eines ersten Polycarbonats, das ein BPA-Polycarbonat mit einem Gewichtsmittel-Molekulargewicht von 20 kg/mol [^{±}1kg/mol] bis 32 kg/mol [^{±} 1kg/mol], vorzugsweise 25kg/mol [^{±} 1 kg/mol] bis 32 kg/mol [^{±} 1kg/mol], ist, bestimmt durch Gelpermeationschromatographie (GPC) unter Anwendung von BPA-Polycarbonatstandards;
(b) 25 bis 65 Gewichtsprozent eines zweiten Polycarbonats, das ein BPA-Polycarbonat mit einem Gewichtsmittel-Molekulargewicht von 20 kg/mol [^{±}1kg/mol] bis 32 kg/mol [^{±} 1kg/mol], vorzugsweise 20kg/mol [^{±} 1kg/mol] bis 24 kg/mol [^{±} 1kg/mol] ist, bestimmt durch Gelpermeationschromatographie (GPC) unter Anwendung von BPA-Polycarbonatstandards; vorausgesetzt, dass das zweite Polycarbonat sich vom ersten Polycarbonat unterscheidet;
(c) 5 bis 40 Gewichtsprozent eines ersten Polysiloxan-Polycarbonat-Copolymers, das ein BPA-Polysiloxan-Polycarbonat-Copolymer ist, hergestellt durch Grenzflächenpolymerisation, das 4 bis 8 Gewichtsprozent Siloxan umfasst und eine durchschnittliche Polydiorganosiloxan-Blocklänge von 40 bis 50 Einheiten und ein Gewichtsmittel-Molekulargewicht von 21 kg/mol [^{±} 1kg/mol] bis 25kg/mol [^{±} 1kg/mol] hat, bestimmt durch Gelpermeationschromatographie (GPC) unter Anwendung von BPA-Polycarbonatstandards;
(d) 1 bis 5 Gewichtsprozent eines zweiten Polysiloxan-Polycarbonat-Copolymers, das ein BPA-Polysiloxan-Polycarbonat-Copolymer ist, hergestellt durch Grenzflächenpolymerisation, das 18 bis 22 Gewichtsprozent Siloxan umfasst und eine durchschnittliche Polydiorganosiloxan-Blocklänge von 40 bis 50 Einheiten und ein Gewichtsmittel-Molekulargewicht von 28 kg/mol [^{±} 1kg/mol] bis 32kg/mol [^{±} 1kg/mol] hat, bestimmt durch Gelpermeationschromatographie (GPC) unter Anwendung von BPA-Polycarbonatstandards;
(e) 0,2 bis 1 Gewichtsprozent eines Flammverzögerungsmittels, das Kaliumdiphenylsulfonsulfonat (KSS) ist;
(f) 0,1 bis 1 Gewichtsprozent eines Antitropfmittels, wobei die Zusammensetzung einen Siloxan-Gesamtgehalt von 1 bis 4 Gewichtsprozent hat; und
(g) 0 bis 5 Gewichtsprozent eines Elastifikators, vorausgesetzt, dass der kombinierte Gewichtsprozentsatz aller Komponenten 100 Gewichtsprozent nicht überschreitet,
wobei das Verhältnis des Siloxangehalts (Gewichtsprozent), der vom ersten Polysiloxan-Polycarbonat-Copolymer beigetragen wird, zum Siloxangehalt (Gewichtsprozent), der vom zweiten Polysiloxan-Polycarbonat-Copolymer beigetragen wird, 3 bis 4 beträgt,
ein Flammstab, der die Zusammensetzung umfasst, erreicht einen UL94 V0-Wert bei einer Dicke von 1,2mm; wobei die Zusammensetzung eine Schmelzvolumenrate (MVR) von 10 cm³/10 min bis 25cm³/10 min bei 300°C und einer Belastung von 1,2kg hat, gemessen nach ASTM D1238; und wobei die Zusammensetzung eine Izod-Kerbschlagzähigkeit von mindestens 800 J/m hat, gemessen in einem Izod-Kerbschlagzähigkeitstest bei 23°C gemäß ASTM D256 an einem Formteil mit einer Dicke von 3,2 mm.

2. Das Elektronikgehäuse gemäß Anspruch 1, wobei des Verhältnis des ersten Polysiloxan-Polycarbonat-Copolymers (Gewichtsprozent) zum zweiten Polysiloxan-Polycarbonat-Copolymer (Gewichtsprozent) 8 bis 12 beträgt.

3. Das Elektronikgehäuse gemäß einem beliebigen der Ansprüche 1-2, wobei die Zusammensetzung einen Gesamt-Siloxangehalt nach Gewicht von 1% bis 2% hat.

4. Das Elektronikgehäuse gemäß einem beliebigen der Ansprüche 1-3, das weiter den Elastifikator umfasst.

5. Das Elektronikgehäuse gemäß einem beliebigen der Ansprüche 1-4, wobei die Zusammensetzung eine Risshaltetemperatur von höchstens -10°C hat, bestimmt nach ASTM D256 an einem Formteil mit einer Dicke von 3,2 mm.

6. Das Elektronikgehäuse gemäß einem beliebigen der Ansprüche 1-5, das 20 bis 40 Gewichtsprozent des ersten Polysiloxan-Polycarbonat-Copolymers umfasst.

7. Das Elektronikgehäuse gemäß einem beliebigen der Ansprüche 1-6, das 2 bis 4 Gewichtsprozent des zweiten Polysiloxan-Polycarbonat-Copolymers umfasst.

8. Das Elektronikgehäuse gemäß einem beliebigen der Ansprüche 1-7, wobei das Antitropfmittel Styrol-Acrylnitril-eingekapseltes PTFE (TSAN) ist.

9. Das Elektronikgehäuse gemäß einem beliebigen der Ansprüche 4-8, wobei der Elastifikator Folgendes ist: (a) ein Elastifikator auf der Basis eines Siloxankerns und einer Acrylschale, der 10 Gewichtsprozent Siloxan umfasst; oder (b) ein Methylmethacrylat-Butadien-Styrol-Pulver.

10. Das Elektronikgehäuse gemäß einem beliebigen der Ansprüche 1-9, wobei die Zusammensetzung weiter 0,3 Gewichtsprozent Kohleschwarz umfasst.

11. Das Elektronikgehäuse gemäß einem beliebigen der Ansprüche 1-10, wobei die Zusammensetzung einen L*-Wert von höchstens 8, ohne Glanzeinschluss, hat, bestimmt nach ASTM D2244 an einem geformten Farbchip mit einer Dicke von 2,5mm.

12. Das Elektronikgehäuse gemäß einem beliebigen der Ansprüche 1-11, wobei das Elektronikgehäuse keine sichtbaren Formgrate hat.

13. Das Elektronikgehäuse gemäß einem beliebigen der Ansprüche 1-12, wobei das Elektronikgehäuse einen Relativen Temperaturindex (RTI) mit Schlagleistung hat, gemessen bei 115°C nach UL 746.

14. Das Elektronikgehäuse gemäß einem beliebigen der Ansprüche 1-13, wobei die Zusammensetzung gewählt ist aus der Gruppe bestehend aus: (a) einer Zusammensetzung, die nach Gewicht Folgendes umfasst: 36% des ersten Polycarbonats; 41% des zweiten Polycarbonats; 20% des ersten Polycarbonat-Siloxan-Copolymers; 0,3% KSS; 0,4% des Antitropfmittels und 2% des zweiten Polycarbonat-Siloxan-Copolymers; (b) einer Zusammensetzung, die nach Gewicht Folgendes umfasst: 31% des ersten Polycarbonats; 35% des zweiten Polycarbonats; 30% des ersten Polycarbonat-Siloxan-Copolymers; 0,3% KSS; 0,4% des Antitropfmittels und 3% des zweiten Polycarbonat-Siloxan-Copolymers; (c) einer Zusammensetzung, die nach Gewicht Folgendes umfasst: 26% des ersten Polycarbonats; 29% des zweiten Polycarbonats; 40% des ersten Polycarbonat-Siloxan-Copolymers; 0,3% KSS; 0,4% des Antitropfmittels und 4% des zweiten Polycarbonat-Siloxan-Copolymers; (d) einer Zusammensetzung, die nach Gewicht Folgendes umfasst: 27% des ersten Polycarbonats; 26% des zweiten Polycarbonats; 40% des ersten Polycarbonat-Siloxan-Copolymers; 0,3% KSS, 0,4% des Antitropfmittels, 4% des zweiten Polycarbonat-Siloxan-Copolymers und 1% des Elastifikators; und (e) einer Zusammensetzung, die nach Gewicht Folgendes umfasst: 27% des ersten Polycarbonats; 62% des zweiten Polycarbonats; 5% des ersten Polycarbonat-Siloxan-Copolymers; 0,3% KSS; 0,4% des Antitropfmittels; 4% des zweiten Polycarbonat-Siloxan-Copolymers und 1% des Elastifikators.

## Revendications

1. Boîtier électronique comprenant une composition thermoplastique comprenant :
(a) de 25 % en poids à 40 % en poids d'un premier polycarbonate qui est un polycarbonate de BPA ayant un poids moléculaire moyen en poids de 20 kg/mol [± 1 kg/mol] à 32 kg/mol [± 1 kg/mol], de préférence de 25 kg/mol [± 1 kg/mol] à 32 kg/mol [± 1 kg/mol], tel que déterminé par chromatographie par perméation de gel (GPC) en utilisant des étalons de polycarbonate de BPA ;
(b) de 25 % en poids à 65 % en poids d'un second polycarbonate qui est un polycarbonate de BPA ayant un poids moléculaire moyen en poids de 20 kg/mol [± 1 kg/mol] à 32 kg/mol [± 1 kg/mol], de préférence de 20 kg/mol [± 1 kg/mol] à 24 kg/mol [± 1 kg/mol], tel que déterminé par chromatographie par perméation de gel (GPC) en utilisant des étalons de polycarbonate de BPA ; à condition que le second polycarbonate soit différent du premier polycarbonate ;
(c) 5 % en poids à 40 % en poids d'un premier copolymère polysiloxane-polycarbonate qui est un copolymère polysiloxane-polycarbonate de BPA produit par polymérisation interfaciale, comprenant de 4 % en poids à 8 % en poids de siloxane, ayant une longueur de bloc polydiorganosiloxane moyenne de 40 à 50 motifs, et ayant un poids moléculaire moyen en poids de 21 kg/mol [± 1 kg/mol] à 25 kg/mol [± 1 kg/mol], tel que déterminé par chromatographie par perméation de gel (GPC) en utilisant des étalons de polycarbonate de BPA ;
(d) de 1 % en poids à 5 % en poids d'un second copolymère polysiloxane-polycarbonate qui est un copolymère polysiloxane-polycarbonate de BPA produit par polymérisation interfaciale, comprenant de 18 % en poids à 22 % en poids de siloxane, ayant une longueur de bloc polydiorganosiloxane moyenne de 40 à 50 motifs, et ayant un poids moléculaire moyen en poids de 28 kg/mol [± 1 kg/mol] à 32 kg/mol [± 1 kg/mol], tel que déterminé par chromatographie par perméation de gel (GPC) en utilisant des étalons de polycarbonate de BPA ;
(e) de 0,2 % en poids à 1 % en poids d'un ignifuge qui est le sulfonate de diphénylsulfone de potassium (KSS) ;
(f) de 0,1 % en poids à 1 % en poids d'un agent anti-goutte ; dans lequel la composition a une teneur totale en siloxane de 1 % en poids à 4 % en poids ; et
(g) de 0 à 5 % en poids d'un modificateur d'impact, à condition que le % en poids combinés de tous les composants n'excède pas 100 % en poids,
dans lequel le rapport de la teneur en siloxane (% en poids) provenant du premier copolymère polysiloxane-polycarbonate à la teneur en siloxane (% en poids) provenant du second copolymère polysiloxane-polycarbonate est de 3 à 4,
un pare-flammes comprenant la composition atteint un indice UL94 V0 à une épaisseur de 1,2 mm ; dans lequel la composition a un débit volumique à l'état fondu (MVR) de 10 cm³/10 min à 25 cm³/10 min à 300 °C avec une charge de 1,2 kg, tel que mesuré conformément à la norme ASTM D1238 ; et dans lequel la composition a une énergie sous impact izod avec entaille d'au moins 800 J/m, telle que mesurée dans un test sous impact izod avec entaille à 23 °C conformément à la norme ASTM D256 sur une pièce moulée ayant une épaisseur de 3,2 mm.

2. Boîtier électronique selon la revendication 1, dans lequel le rapport du premier copolymère polysiloxane-polycarbonate (% en poids) au second copolymère polysiloxane-polycarbonate (% en poids) est de 8 à 12.

3. Boîtier électronique selon l'une quelconque des revendications 1 à 2, dans lequel la composition a une teneur totale en siloxane, en poids, de 1 % à 2 %.

4. Boîtier électronique selon l'une quelconque des revendications 1 à 3, comprenant en outre le modificateur d'impact.

5. Boîtier électronique selon l'une quelconque des revendications 1 à 4, dans lequel la composition a une température de transition ductile à fragile inférieure ou égale à -10 °C, déterminée conformément à la norme ASTM D256 sur une pièce moulée ayant une épaisseur de 3,2 mm.

6. Boîtier électronique selon l'une quelconque des revendications 1 à 5, comprenant de 20 % en poids à 40 % en poids du premier copolymère polysiloxane-polycarbonate.

7. Boîtier électronique selon l'une quelconque des revendications 1 à 6, comprenant de 2 % en poids à 4 % en poids du second copolymère polysiloxane-polycarbonate.

8. Boîtier électronique selon l'une quelconque des revendications 1 à 7, dans lequel l'agent anti-goutte est du PTFE encapsulé par du styrène-acrylonitrile (TSAN).

9. Boîtier électronique selon l'une quelconque des revendications 4 à 8, dans lequel le modificateur d'impact est : (a) un modificateur d'impact à base d'un noyau de siloxane et d'une enveloppe d'acrylique comprenant 10 % en poids de siloxane ; ou (b) une poudre de méthacrylate de méthyle-butadiène-styrène.

10. Boîtier électronique selon l'une quelconque des revendications 1 à 9, dans lequel la composition comprend en outre, en poids, 0,3 % de noir de carbone.

11. Boîtier électronique selon l'une quelconque des revendications 1 à 10, dans lequel la composition a une valeur L* inférieure ou égale à 8, avec le composant spéculaire exclu, telle que déterminée conformément à la norme ASTM D2244 sur une puce de couleur moulée ayant une épaisseur de 2,5 mm.

12. Boîtier électronique selon l'une quelconque des revendications 1 à 11, dans lequel le boîtier électronique n'a pas de lignes de soudure visibles.

13. Boîtier électronique selon l'une quelconque des revendications 1 à 12, dans lequel le boîtier électronique a un indice de température relative (ITR) avec une performance aux chocs, mesurée à 115 °C conformément à la norme UL 746.

14. Boîtier électronique selon l'une quelconque des revendications 1 à 13, dans lequel la composition est choisie parmi le groupe consistant en : (a) une composition comprenant, en poids, 36 % du premier polycarbonate ; 41 % du second polycarbonate ; 20 % du premier copolymère polycarbonate-siloxane ; 0,3 % de KSS ; 0,4 % de l'agent anti-goutte ; et 2% du second copolymère polycarbonate-siloxane ; (b) une composition comprenant, en poids, 31 % du premier polycarbonate ; 35 % du second polycarbonate ; 30 % du premier copolymère polycarbonate-siloxane ; 0,3 % de KSS ; 0,4 % de l'agent anti-goutte ; et 3 % du second copolymère polycarbonate-siloxane ; (c) une composition comprenant, en poids, 26 % du premier polycarbonate ; 29 % du second polycarbonate ; 40 % du premier copolymère polycarbonate-siloxane ; 0,3 % de KSS ; 0,4 % de l'agent anti-goutte ; et 4 % du second copolymère polycarbonate-siloxane ; (d) une composition comprenant, en poids, 27 % du premier polycarbonate ; 26 % du second polycarbonate ; 40 % du premier copolymère polycarbonate-siloxane ; 0,3 % de KSS ; 0,4 % de l'agent anti-goutte ; 4 % du second copolymère polycarbonate-siloxane ; et 1 % du modificateur d'impact ; et (e) une composition comprenant, en poids, 27 % du premier polycarbonate ; 62 % du second polycarbonate ; 5 % du premier copolymère polycarbonate-siloxane ; 0,3 % de KSS ; 0,4 % de l'agent anti-goutte ; 4 % du second copolymère polycarbonate-siloxane ; et 1 % du modificateur d'impact.
